# FASCICULE DE BREVET EUROPEEN

(11) **EP 2 334 619 B1**
(45) Date de publication et mention de la délivrance du brevet: **15.08.2012**
(21) Numéro de dépôt: 09783637.3
(22) Date de dépôt: 01.10.2009
(51) Int. Cl.: C04B 41/72, E04G 23/02, G21F 9/30

(54) **PROCEDE DE DECONTAMINATION ELECTROCINETIQUE D'UN MILIEU SOLIDE POREUX**
VERFAHREN ZUR ELEKTROKINETISCHEN DEKONTAMINATION EINES PORÖSEN FESTEN MEDIUMS
PROCESS FOR THE ELECTROKINETIC DECONTAMINATION OF A POROUS SOLID MEDIUM

(30) Priorité: 03.10.2008 FR 0856716
(43) Date de publication de la demande: 22.06.2011
(73) Titulaire: Commissariat à l'Énergie Atomique et aux Énergies Alternatives, 75015 Paris (FR)
(72) Inventeur: CUER, Frédéric, F-30630 Cornillon (FR); DE NADAÏ, Axel, F-13500 Martigues (FR)
(74) Mandataire: Ilgart, Jean-Christophe
(86) Numéro de dépôt international: PCT/EP2009/062747
(87) Numéro de publication internationale: WO 2010/037809

(56) Documents cités:
- EP-A- 0 398 117
- US-A- 5 296 120

## Description

### DOMAINE TECHNIQUE

La présente invention se rapporte à un procédé de décontamination électrocinétique d'un milieu solide poreux.

Ce procédé, qui est basé sur la migration forcée, par application d'un champ électrique entre deux électrodes disposées en surface du milieu et/ou implantées dans ce milieu, des contaminants vers l'une de ces électrodes (cathode pour les espèces cationiques et pour la plupart des composés organiques ou organométalliques neutres, et anode pour les espèces anioniques), permet d'éliminer très efficacement, de matériaux à matrice cimentaire du type bétons ou mortiers, les espèces chimiques écotoxiques et radiologiques (actinides et lanthanides) présentes dans la profondeur de ces matériaux.

Son utilisation présente donc un intérêt tout particulier pour le démantèlement d'installations militaires ou industrielles, notamment nucléaires, ou pour la réhabilitation d'installations susceptibles d'avoir été contaminées, de par la nature des activités dont elles ont été le siège, par des espèces chimiques écotoxiques comme les métaux lourds, ou radiologiques.

Toutefois, le procédé de l'invention peut également être utilisé pour dépolluer des milieux solides poreux autres que les matériaux à matrice cimentaire comme, par exemple, des sols géologiques, des sédiments tels que les sédiments portuaires, ou encore des vases de dragage avant leur rejet en milieu marin.

### ÉTAT DE LA TECHNIQUE ANTÉRIEURE

Les matériaux à matrice cimentaire présentent, de par leur nature composite, une porosité ouverte non négligeable.

De ce fait, les matériaux à matrice cimentaire qui entrent dans la constitution des installations nucléaires se trouvent, lorsqu'ils sont appelés à être en contact avec des radioéléments en solution (sous forme liquide ou gazeuse), être contaminés en profondeur par ces radioéléments qui diffusent au sein de ces matériaux et peuvent se loger à plusieurs centimètres de leur surface.

Dans ce cas, les traitements surfaciques de décontamination sont totalement inefficaces pour éliminer ces radioéléments.

Au cours des deux dernières décennies, des procédés de déchloruration et de réalcalinisation des bétons armés ont été développés pour limiter la corrosion des armatures internes de ces bétons par les chlorures présents notamment dans les environnements marins, et garantir ainsi la durabilité des ouvrages du génie civil.

Utilisés à titre préventif ou curatif, ces procédés consistent à extraire les chlorures ayant diffusé dans le béton et à maintenir ou à rétablir le pH de la solution interstitielle du béton à une valeur supérieure à 11 par diffusion dans ce béton d'espèces alcalines.

L'extraction des chlorures et la diffusion des espèces alcalines dans le béton sont obtenues, par application d'un courant électrique entre l'armature interne du béton, qui joue le rôle de cathode, et une électrode externe, qui est rapportée de manière temporaire sur la peau du béton et qui joue le rôle d'anode.

La continuité électrique entre l'électrode externe et la peau du béton est assurée par un électrolyte qui sert aussi à recueillir les ions chlorures extraits du béton et à fournir les espèces basiques destinées à diffuser dans celui-ci.

Compte tenu de la configuration souvent complexe des ouvrages du génie civil, cet électrolyte est typiquement une pâte humide de nature organique comme celle décrite dans la demande de brevet européen publiée sous le numéro 0 398 117 (ci-après référence **[1]**) qui consiste en un mélange de fibres de cellulose et d'une solution basique et qui est déposée sur la peau du béton en une couche de 5 à 10 cm d'épaisseur. La mesure de la résistance entre l'armature interne du béton et l'électrode externe permet d'évaluer le degré d'assèchement de la pâte lié à l'évaporation de l'eau qu'elle contient et de prévoir à quelle fréquence les fibres de cellulose doivent être réhumidifiées avec la solution basique (en moyenne tous les 2 ou 3 jours).

D'autres procédés de régénération des bétons armés consistent à appliquer sur la peau du béton, de manière prolongée, un mortier actif de réparation qui est composé d'un liant hydraulique chargé en ions basiques, et de granulats métalliques.

Dans ce type de procédé, que l'on trouve décrit dans la demande de brevet français publiée sous le numéro 2 770 839 (ci-après référence [2]), le liant hydraulique sert de pâte conductrice tandis que les granulats métalliques jouent le rôle d'électrodes.

Le système fonctionne sans apport de courant électrique extérieur. En effet, le couple formé par l'armature interne du béton et les granulats métalliques constitue au sein de la pâte conductrice un couple d'oxydoréduction qui débite un courant qui polarise spontanément cette armature et ces granulats et cette polarisation est entretenue par l'humidité relative de la pâte, par la réserve d'ions du mortier et par la consommation des charges métalliques. L'humidité ambiante suffit à la réhumidification de la pâte conductrice.

Les procédés décrits ci-dessus ne sont pas transposables à la décontamination des matériaux à matrice cimentaire entrant dans la constitution d'installations nucléaires.

En effet, l'utilisation d'un électrolyte de nature organique, comme décrit dans la référence [1], conduirait à récupérer les contaminants dans un milieu organique, totalement incompatible avec les filières de traitement des déchets nucléaires pour lesquelles les seuils de concentration en matières organiques sont extrêmement faibles.

Quant à l'utilisation d'un mortier actif de réparation, comme décrit dans la référence **[2]**, celle-ci nécessiterait, pour récupérer les contaminants, la mise en oeuvre de techniques d'écroûtage qui sont, dans le secteur nucléaire, lourdes à mettre en oeuvre et génératrices d'une quantité de déchets trop importante.

Les Inventeurs se sont donc fixés pour but de fournir un procédé qui soit parfaitement adapté à la décontamination de matériaux à matrice cimentaire entrant dans la constitution d'installations nucléaires, notamment en ce qu'il permet, outre d'extraire très efficacement les contaminants et, en particulier, les radioéléments de ces matériaux, de récupérer facilement ces contaminants et ce, sous la forme d'un déchet propre à entrer dans l'une des filières de traitement et de conditionnement des déchets nucléaires.

Les Inventeurs se sont également fixés pour but que ce procédé soit simple à mettre en oeuvre et ce, quelle que soit la configuration et la disposition des matériaux devant être décontaminés, et se solde par la production d'un volume de déchets le plus réduit possible.

### EXPOSÉ DE L'INVENTION

Ces buts et d'autres encore sont atteints par l'invention qui propose un procédé de décontamination électrocinétique d'un milieu solide poreux, qui comprend :
a) l'extraction des espèces contaminantes présentes dans ce milieu solide dans un électrolyte qui se présente sous la forme d'un gel essentiellement inorganique, cette extraction étant réalisée en appliquant un courant électrique entre deux électrodes disposées à la surface et/ou à l'intérieur du milieu solide, le contact de l'une au moins de ces électrodes avec ledit milieu solide étant assuré par une couche dudit gel,
b) le séchage du gel renfermant les espèces contaminantes ainsi extraites jusqu'à l'obtention d'un résidu sec qui se fracture, et
c) l'élimination du résidu sec ainsi obtenu dudit milieu solide.

Dans ce qui précède et ce qui suit, on entend par « gel essentiellement minéral », un gel qui ne comprend pas plus de 10% en masse, de préférence pas plus de 5% en masse et, idéalement, pas plus de 3% en masse de matière(s) organique(s).

Conformément à l'invention, ce gel comprend de 10 à 40% en masse d'un agent viscosant inorganique, ou minéral, dispersé dans 60 à 90% en masse d'une phase aqueuse de pH basique.

L'agent viscosant inorganique, dont la fonction est de permettre au gel, d'une part, d'adhérer sur une surface quelles qu'en soient la configuration et la disposition, et, d'autre part, de former en séchant un résidu sec qui se fracture et se détache aisément de cette surface, est, de préférence, de l'alumine ou un mélange d'alumine et de silice, la présence de silice dans le gel ayant, en effet, l'avantage de réduire la vitesse de séchage de ce gel par rapport à ce qu'elle est en l'absence de silice pour des conditions de température et d'hygrométrie identiques.

Les alumines susceptibles d'être utilisées selon l'invention sont notamment les alumines calcinées, les alumines calcinées broyées et les alumines pyrogénées comme, par exemple, les alumines qui sont commercialisées par la société DEGUSSA AG sous les dénominations Aeroxil^{®} (Alu C, Alu 65, Alu 130, ...) et celles qui sont commercialisées par la société CABOT sous les dénominations SpectrAI^{®} (51, 81 ou 100).

Parmi ces alumines, on préfère toutefois les alumines pyrogénées et, en particulier, l'alumine Aeroxil^{®} Alu C qui présente une surface spécifique BET de 100 m²/g.

Quant aux silices, elles peuvent aussi bien être hydrophiles, hydrophobes, précipitées comme, par exemple, les silices de la série Tixosil^{®} (38, 73, ...) de la société RHODIA, que pyrogénées comme, par exemple, les silices qui sont commercialisées par la société DEGUSSA AG sous les dénominations Aerosil^{®} et celles qui sont commercialisées par la société CABOT sous les dénominations Cab-O-Sil^{®} (M5, H5, EH5, ...).

Parmi ces silices, on préfère toutefois les silices pyrogénées et, en particulier, la silice Aerosil^{®} 380 qui présente une surface spécifique BET de 380 m²/g.

Conformément à l'invention, l'agent viscosant ne représente, de préférence, pas plus de 30% en masse du gel de manière à conférer à ce gel un temps de séchage relativement long, c'est-à-dire en pratique de plusieurs jours, à une température de 20 à 30°C et une hygrométrie relative de 20 à 70%, indépendamment du fait qu'il renferme de la silice ou pas.

Lorsque le gel renferme de la silice, celle-ci ne représente avantageusement pas plus de 5% en masse et, mieux encore, pas plus de 1% en masse de l'agent viscosant.

Comme précédemment indiqué, la phase aqueuse du gel est de nature basique, la présence d'une base dans le gel ayant, en effet, l'avantage d'augmenter la conductivité électrique de ce gel et, dans le cas d'un certain nombre de milieux solides poreux comme, par exemple, les matériaux à matrice cimentaire, de maintenir et/ou de rétablir le pH de la partie de ces milieux qui se trouve au contact du gel et d'éviter ainsi que ne se produisent, au cours de l'étape a), des réactions acido-basiques nuisibles à l'intégrité du gel et, par voie de conséquence, au rendement de la décontamination.

Cette phase aqueuse est, de préférence, une solution d'une base inorganique, auquel cas celle-ci est avantageusement choisie parmi la soude, la potasse, l'hydroxyde de calcium, le carbonate de potassium, le carbonate de sodium et leurs mélanges et, mieux encore, parmi la soude et la potasse dont le caractère hygroscopique contribue, lui aussi, à réduire la vitesse de séchage du gel.

Quelle que soit la base utilisée, celle-ci est, de préférence, présente dans la phase aqueuse à une concentration d'au moins 3 moles/L et, mieux encore, d'au moins 5 moles/L de phase aqueuse, des concentrations de 5 à 10 moles/L s'étant révélées convenir particulièrement bien.

Conformément à l'invention, le gel peut comprendre de plus un polymère superabsorbant de manière à faciliter la réhumidification de ce gel au cours de l'étape a).

Ce polymère, qui peut notamment être choisi parmi les polymères superabsorbants commercialisés par la société ARKEMA sous les dénominations Aquakeep^{®} et Norsocryl^{®} et les mélanges de ces polymères, ne représente, de préférence, pas plus de 1% en masse du gel.

Le gel peut en outre comprendre un agent tensioactif, de préférence non ionique, de manière à lui conférer des propriétés rhéologiques telles qu'il puisse aisément être pulvérisé, par exemple au pistolet, sur des surfaces verticales du type murs ou piliers, voire sur des surfaces horizontales du type plafonds, sans risque d'épandage. La présence d'un agent tensioactif dans le gel permet également de maîtriser l'adhérence du résidu sec obtenu à l'issue de l'étape b) vis-à-vis de la surface sur laquelle il se trouve et de contrôler la taille des fragments résultant de la fracture du gel.

Cet agent tensioactif, qui peut notamment être choisi parmi les copolymères séquencés commercialisés par la société IFRACHIMIE sous les dénominations Ifralan^{®} et par la société BASF sous les dénominations Pluronic^{®} et les mélanges de ces copolymères, ne représente, de préférence, pas plus de 5% en masse et, mieux encore, pas plus de 2% en masse du gel.

Selon un premier mode de mise en oeuvre du procédé de l'invention, le milieu solide poreux comprenant une armature interne électriquement conductrice, l'une des électrodes est constituée par cette armature ou une partie de cette armature, tandis que l'autre électrode est constitué par un élément électriquement conducteur qui est appliqué sur une surface du milieu solide poreux ou implanté dans ce milieu, auquel cas seul le contact de cet élément avec ledit milieu est assuré par une couche de gel.

Selon un autre mode de mise en oeuvre du procédé de l'invention, les deux électrodes sont constituées par des éléments électriquement conducteurs qui sont appliqués sur deux surfaces différentes du milieu solide poreux, auquel cas le contact de chacun de ces éléments avec ce milieu est assuré par une couche de gel.

Selon encore un autre mode de mise en oeuvre du procédé de l'invention, les deux électrodes sont constituées par deux éléments électriquement conducteurs qui sont implantés dans le milieu solide poreux, auquel cas le contact de chacun de ces éléments avec ce milieu est assuré par une couche de gel.

Dans tous les cas, la ou les couches de gel présentent, de préférence, une épaisseur de 0,5 à 2 cm et, mieux encore, de 1 à 2 cm de manière à, là encore, réduire la vitesse de séchage du gel, l'expérience ayant, en effet, montré que le gel sèche d'autant plus vite qu'il est déposé en couches plus minces, pour des conditions de température et d'hygrométrie identiques.

Par ailleurs, leur dépôt sur les électrodes et/ou sur le milieu solide poreux peut être réalisé par des procédés tout à fait classiques tels que la pulvérisation, par exemple au pistolet, ou l'application au moyen d'un pinceau ou d'une taloche.

Dans la mesure où un assèchement du gel se traduit par une chute de sa conductivité électrique, l'étape a) peut comprendre une ou plusieurs opérations consistant à réhumidifier le gel avec une solution électrolytique, de préférence de composition identique à celle de la phase aqueuse de ce gel, de manière à ramener la conductivité électrique de ce gel à sa valeur d'origine. La formulation du gel sera, toutefois, de préférence choisie de manière à éviter ou, à tout le moins limiter le nombre de ces opérations.

Le séchage du gel prévu à l'étape b) peut être naturel, c'est-à-dire résulter de l'évaporation de la phase aqueuse de ce gel au contact de l'air ambiant, ou bien être forcé, c'est-à-dire par apport d'une source thermique dénuée de soufflerie, du type chauffage infrarouge. Dans tous les cas, ce séchage est conduit jusqu'à l'obtention d'un résidu sec qui se fracture, typiquement en paillettes de dimensions millimétriques.

Le résidu sec ainsi obtenu peut alors être facilement éliminé, par exemple par brossage et/ou aspiration.

Le procédé de l'invention présente de nombreux avantages. En particulier :
- il permet d'extraire très efficacement, d'un milieu solide poreux, les espèces contaminantes qui se trouvent en profondeur de ce milieu ;
- il permet de récupérer très facilement ces espèces contaminantes ;
- il est simple à mettre en oeuvre, notamment en ce qu'il utilise un électrolyte qui peut, d'une part, être aisément préparé à partir de produits chimiques disponibles dans le commerce et, d'autre part, être aisément utilisé quelles que soient la configuration et la disposition des milieux solides poreux devant être traités ;
- enfin, de par leur faible volume et leur nature minérale, les déchets qu'il produit sont aptes à entrer dans l'une des filières de traitement et de conditionnement des déchets nucléaires et ce, sans avoir à subir de traitement préalable.

Il convient donc particulièrement bien à la décontamination, notamment en radioéléments (actinides et lanthanides) tels que le césium, de matériaux à matrice cimentaire entrant dans la constitution d'installations nucléaires.

D'autres avantages et caractéristiques de l'invention ressortiront à la lecture du complément de description qui suit, donné en référence aux figures annexées.

Il va de soi que ce complément de description n'est donné qu'à titre d'illustration de l'objet de l'invention et ne doit en aucun cas être interprété comme une limitation de cet objet.

### BRÈVE DESCRIPTION DES FIGURES

La figure 1 est un schéma d'un premier mode de mise en oeuvre de l'étape a) du procédé de l'invention.
La figure 2 est un schéma d'un deuxième mode de mise en oeuvre de l'étape a) du procédé de l'invention.
La figure 3 est un schéma d'un troisième mode de mise en oeuvre de l'étape a) du procédé de l'invention.
La figure 4 est un graphique illustrant l'influence de la présence de soude ou de potasse dans la phase aqueuse d'un gel sur la cinétique de séchage de ce gel.
La figure 5 est un graphique illustrant l'évolution en fonction du temps de la résistance électrique et de la masse d'un gel dont la phase aqueuse contient de la potasse lorsque ce gel est soumis à un séchage sous un champ électrique.
La figure 6 est un graphique illustrant l'influence du pH d'un gel sur la cinétique de séchage de ce gel.
La figure 7 est un graphique illustrant l'influence de la présence de silice dans un gel sur la cinétique de séchage de ce gel.
La figure 8 est un graphique illustrant l'influence de l'épaisseur du dépôt d'un gel sur la cinétique de séchage de ce gel.
La figure 9 est un graphique illustrant l'évolution en fonction du temps de la teneur en césium d'un gel telle qu'observée lorsque ce gel est utilisé comme électrolyte pour décontaminer un mortier.

### EXPOSE DETAILLE DE MODES DE MISE EN OEUVRE DU PROCEDE SELON L'INVENTION

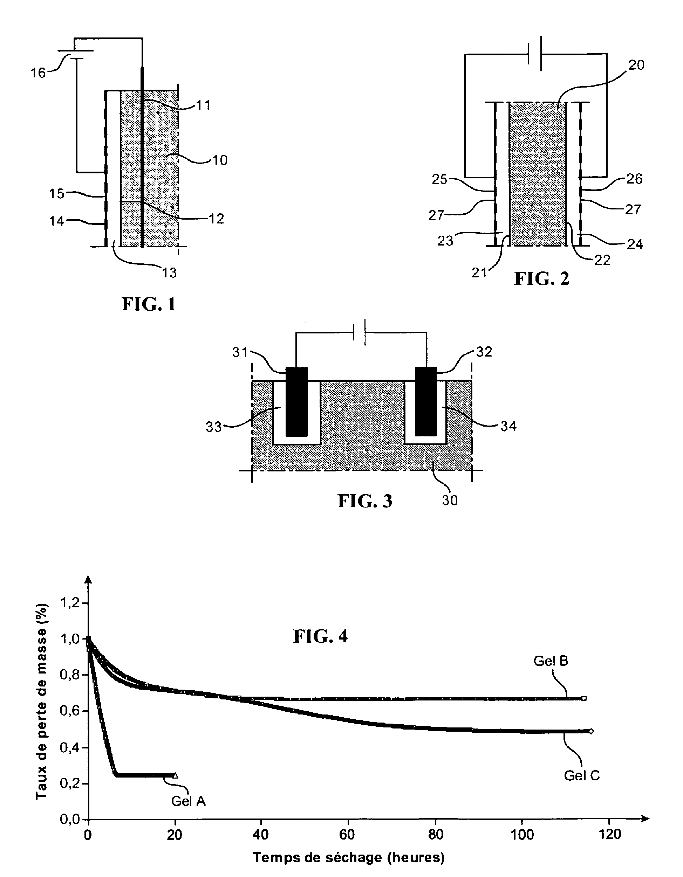

On se réfère tout d'abord aux figures 1 à 3 qui représentent, sous la forme de schémas, trois modes de mise en oeuvre différents de l'étape a) du procédé de l'invention.

Le premier de ces modes, qui est illustré sur la figure 1, est utilisable pour décontaminer un milieu solide poreux 10 comprenant une armature interne 11 électriquement conductrice, capable de jouer le rôle d'électrode et dont une partie a été rendue accessible, et une surface libre 12 sensiblement parallèle à cette armature.

Un tel milieu est, par exemple, un bloc de béton ou de mortier armé.

Dans ce cas, une couche 13 d'un gel tel que défini ci-avant, mesurant typiquement de 0,5 à 2 cm d'épaisseur, est appliquée sur la surface 12, par exemple par pulvérisation, à l'aide d'un pinceau ou d'une taloche. Puis, la couche 13 de gel est recouverte d'un élément électriquement conducteur 14, capable également de jouer le rôle d'électrode.

La couche 13 de gel a, en conditions opératoires, une double fonction : d'une part, celle d'assurer une continuité électrique entre la surface 12 du milieu solide poreux 10 et l'élément électriquement conducteur 14 ; d'autre part, celle de recueillir et de piéger les espèces contaminantes qui, sous l'effet de l'application d'un courant électrique entre l'armature interne 11 et l'élément électriquement conducteur 14, vont migrer en direction de cet élément.

Comme visible sur la figure 1, l'élément électriquement conducteur 14 est, de préférence, percé de trous 15 pour offrir à l'opérateur un accès visuel à la couche 13 de gel et lui permettre, si nécessaire, de réhumidifier facilement ce gel en conditions opératoires, par exemple par pulvérisation d'une solution électrolytique, typiquement de même composition que la phase aqueuse du gel, au travers de ces trous.

Aussi, l'élément électriquement conducteur 14 est-il typiquement une plaque grillagée en métal, par exemple en acier inoxydable, en platine, en titane ou analogue.

Décontaminer un milieu solide poreux en réalisant l'étape a) selon le mode de mise en oeuvre illustré sur la figure 1 est extrêmement facile.

En effet, il suffit de relier l'armature interne 11 et l'élément électriquement conducteur 14 à une source d'alimentation électrique 16 de manière à polariser cette armature et cet élément, l'un(e) en anode et l'autre en cathode, pour que le traitement de décontamination électrocinétique puisse commencer.

Cette polarisation doit, bien entendu, être convenablement choisie en fonction des espèces contaminantes que l'on souhaite extraire du milieu solide poreux 10.

Ainsi, si les espèces contaminantes à extraire du milieu solide poreux 10 sont des espèces cationiques (chargées positivement), ce qui est le cas, par exemple, des métaux lourds et des radioéléments, alors on polarise l'armature interne 11 en anode tandis qu'on polarise l'élément électriquement conducteur 14 en cathode.

En revanche, si les espèces contaminantes à extraire du milieu solide poreux 10 sont des espèces anioniques (chargées négativement), ce qui est le cas, par exemple, des ions chlorures, fluorures et sulfures, alors on polarise l'armature interne 11 en cathode tandis qu'on polarise l'élément électriquement conducteur 14 en anode.

Le courant électrique imposé à l'armature interne 11 et à l'élément électriquement conducteur 14 peut être continu ou pulsé. Il est préférable que la densité de courant ne dépasse pas 5 A/m² d'armature interne afin d'éviter toute dégradation du matériau.

L'assèchement du gel peut être apprécié, non seulement visuellement grâce aux trous 15 de l'élément électriquement conducteur 14, mais également par un suivi de la résistance mesurée aux bornes des deux électrodes (armature interne 11/élément électriquement conducteur 14).

Une augmentation notable de cette résistance traduit un assèchement du gel et, donc, une conductivité électrique insuffisante de celui-ci. La pulvérisation de solution électrolytique au travers des trous 15 permet alors de rétablir la conductivité électrique du gel à sa valeur initiale.

Lorsque les exigences de décontamination sont atteintes ou lorsque le gel est saturé en contaminants, la couche 13 de gel est soumise à un séchage qui peut être naturel (par simple évaporation de la phase aqueuse du gel au contact de l'air ambiant) ou forcé (par apport d'une source thermique du type chauffage infrarouge) jusqu'à l'obtention d'un résidu sec qui se fracture, typiquement en paillettes de dimensions millimétriques.

Après retrait de l'élément électriquement conducteur 14, ce résidu peut alors aisément être éliminé de la surface 12, par exemple par brossage de cette surface et/ou par aspiration du résidu.

A titre d'exemple, pour décontaminer en radioéléments un bloc de béton armé, ayant pour armature interne, un treillis de maillage compris entre 3,5 et 4 cm, formé de tiges en fer mesurant 8 mm de diamètre et reliées entre elles au niveau de chaque noeud par un fil de fer, on pourra utiliser :
- l'armature interne de ce bloc en tant qu'anode,
- une couche de 2 cm d'épaisseur d'un gel comprenant 23,7% en masse d'alumine Aeroxil^{®} Alu C, 1% en masse de silice Aerosil^{®} 380 et une solution de potasse 5 M, en tant qu'électrolyte,
- une plaque de titane percée de trous circulaires mesurant 8 mm de diamètre et espacés les uns des autres de 3 mm, en tant que cathode, et
- une densité de courant électrique moyenne de 2 A/m² d'armature interne.

On se réfère à présent à la figure 2 qui illustre schématiquement un deuxième mode de mise en oeuvre de l'étape a) du procédé de l'invention, qui ne diffère du précédent qu'en ce que les deux électrodes nécessaires à l'application du courant électrique dans le milieu solide poreux sont toutes deux rapportées sur ce milieu.

Ce deuxième mode est typiquement utilisable pour décontaminer un milieu solide poreux 20 qui est dépourvu d'armature interne électriquement conductrice, mais qui comprend deux surfaces libres opposées, respectivement 21 et 22, sur lesquelles peuvent être rapportés deux éléments électriquement conducteurs, propres à jouer le rôle d'électrodes.

Un tel milieu est, par exemple, un bloc de béton ou de mortier non armé.

Dans ce cas, une couche, respectivement 23 et 24, d'un gel tel que précédemment défini est appliquée sur chacune des surfaces 21 et 22 puis chacune de ces couches est recouverte d'un élément électriquement conducteur, respectivement 25 et 26.

Là également, ces éléments électriquement conducteurs sont, de préférence, percés de trous 27 pour les mêmes raisons que celles précédemment mentionnées pour l'élément électriquement conducteur 14 montré sur la figure 1.

La décontamination d'un milieu solide poreux en réalisant l'étape a) selon ce mode de mise en oeuvre se fait sur le même principe que selon le mode de mise en oeuvre illustré sur la figure 1, à ceci près que l'accessibilité des deux éléments électriquement conducteurs 25 et 26 permet de choisir de polariser ces éléments, l'un en anode et l'autre en cathode, indépendamment de la charge des espèces contaminantes devant être extraites de ce milieu.

On se réfère encore à la figure 3 qui illustre schématiquement un troisième mode de mise en oeuvre de l'étape a) du procédé de l'invention.

Ce troisième mode est typiquement utilisable pour décontaminer :
* soit un milieu solide poreux 30 qui, non seulement est dépourvu d'armature interne électriquement conductrice mais qui, de plus, n'a pas deux surfaces libres sur lesquelles fixer des éléments électriquement conducteurs comme, par exemple, un sol géologique,
* soit une zone très localisée d'un milieu solide poreux 30 suite, par exemple, à une contamination accidentelle et ce, que ce milieu comprenne ou non une armature interne électriquement conductrice,
* soit encore une zone d'un milieu solide poreux 30 qui comprend une armature interne électriquement conductrice mais dans lequel la profondeur de la contamination est supérieure à l'épaisseur de l'enrobage de cette armature.

Dans tous les cas, deux électrodes en forme de bougies, respectivement 31 et 32, sont implantées dans le milieu solide poreux 30, éventuellement dans des logements préalablement aménagés à cet effet, par exemple par le biais de carottages, en étant placées de part et d'autre de la zone dudit milieu devant être décontaminée.

La continuité électrique entre les électrodes 31 et 32 et le milieu solide poreux qui les entoure est assurée par une couche de gel, respectivement 33 et 34, qui est soit déposée sur la surface des électrodes avant leur implantation soit déposée sur la paroi des logements destinés à recevoir ces électrodes.

La décontamination d'un milieu solide poreux en réalisant l'étape a) selon ce mode de mise en oeuvre se fait sur le même principe que selon le mode de mise en oeuvre illustré sur la figure 2, à ceci près que les étapes de séchage et d'élimination du gel sont réalisées après avoir retiré les électrodes de ce milieu solide.

### RESULTATS EXPERIMENTAUX

Les gels utilisés dans les exemples qui suivent ont tous été préparés en utilisant le même protocole.

Celui-ci consiste à verser l'agent viscosant (qui est soit de l'alumine Aeroxil^{®} Alu C, soit un mélange d'alumine Aeroxil^{®} Alu C et de silice Aerosil^{®} 380) dans de l'eau ou, le cas échéant, dans une solution de soude ou de potasse maintenue sous agitation mécanique, à une vitesse comprise entre 600 et 800 tours/minute, et à poursuivre l'agitation du mélange ainsi obtenu pendant 2 à 5 minutes de manière à obtenir un gel homogène.

### Exemple 1 :

Cet exemple porte sur l'influence d'un certain de nombre de paramètres sur la cinétique de séchage du gel utilisé comme électrolyte dans le procédé de l'invention.

### * Influence de la présence de soude ou de potasse dans la phase aqueuse du gel :

La figure 4 représente, sous la forme de courbes, les cinétiques de séchage (c'est-à-dire, les taux de perte de masse en fonction du temps de séchage) de trois gels dénommés ci-après gels A, B et C et comprenant respectivement :
- Gel A : 23,7% en masse d'alumine Aeroxil^{®} Alu C et 76,3% en masse d'eau ;
- Gel B : 23,7% en masse d'alumine Aeroxil^{®} Alu C et 76,3% en masse d'une solution de KOH 5 M ;
- Gel C : 23,7% en masse d'alumine Aeroxil^{®} Alu C et 76,3% en masse d'une solution de NaOH 5 M.

Ces cinétiques de séchage ont été obtenues pour des couches de gel de 2 mm d'épaisseur, à 22°C et 60% d'humidité relative.

Comme le montre cette figure, la vitesse de séchage d'un gel est considérablement réduite par la présence de soude ou de potasse dans la phase aqueuse de ce gel.

En effet, du fait du caractère hygroscopique de ces bases, la compétition entre le processus d'évaporation de la phase aqueuse du gel et celui de la reprise hydrique lié à la présence de soude ou de potasse dans cette phase aqueuse permet de retarder l'obtention du palier qui traduit une élimination totale de l'eau libre contenue dans le gel.

Un gel dont la phase aqueuse contient de la potasse ou de la soude conduit donc plus longtemps le courant électrique qu'un gel dont la phase aqueuse n'est formée que d'eau.

Ceci a notamment été confirmé en soumettant des couches du gel B de 2 mm d'épaisseur à un séchage sous un champ électrique de 8 mA d'intensité, à 22°C et 60% d'humidité relative, en suivant l'évolution de la résistance électrique et de la masse de ces couches au cours du temps.

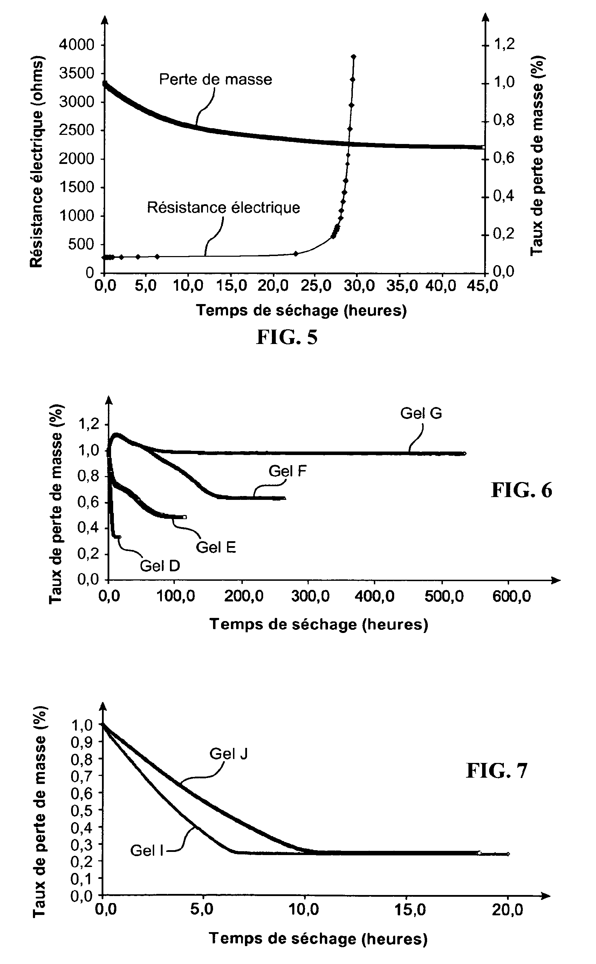

En effet, comme le montre la figure 5 qui présente les résultats de cette expérience, la résistance électrique et, donc, la conductivité électrique du gel se sont révélés être d'une grande stabilité au cours de son séchage.

Ceci est particulièrement intéressant car cela garantit des conditions opératoires uniformes tant que le gel n'est pas totalement sec.

### * Influence du pH du gel :

La figure 6 représente, sous la forme de courbes, les cinétiques de séchage de quatre gels dénommés ci-après gels D, E, F et G et comprenant respectivement :
- Gel D : 23,7% en masse d'alumine Aeroxil^{®} Alu C et 76,3% en masse d'une solution de NaOH 1 M ;
- Gel E : 23,7% en masse d'alumine Aeroxil^{®} Alu C et 76,3% en masse d'une solution de NaOH 5 M ;
- Gel F : 23,7% en masse d'alumine Aeroxil^{®} Alu C et 76,3% en masse d'une solution de NaOH 10 M ;
- Gel G : 23,7% en masse d'alumine Aeroxil^{®} Alu C et 76,3% en masse d'une solution de KOH 10 M.

Ces cinétiques de séchage ont été obtenues pour des couches de gel de 2 mm d'épaisseur, à 22°C et 60% d'humidité relative.

La figure 6 montre que :
- d'une part, pour une base donnée, la vitesse de séchage d'un gel est d'autant plus faible que sa concentration en cette base est élevée, et
- d'autre part, il est possible, en jouant sur la basicité d'un gel, de moduler la vitesse de séchage de ce gel et d'adapter au mieux cette vitesse à la durée du traitement de décontamination.

Ainsi, pour la décontamination de matériaux à matrice cimentaire où les cinétiques d'extraction sont de plusieurs semaines (typiquement de 2 à 4 semaines), on privilégiera l'utilisation d'un gel à concentration très élevée en soude ou en potasse pour limiter le plus possible le nombre d'opérations de réhumidification de ce gel.

### * Influence de la présence de silice dans le gel :

La figure 7 représente, sous la forme de courbes, les cinétiques de séchage de deux gels dénommés ci-après gels I et J et comprenant respectivement :
- Gel I : 23,7% en masse d'alumine Aeroxil^{®} Alu C et 76,3% en masse d'eau ;
- Gel J : 23,5% en masse d'alumine Aeroxil^{®} Alu C, 1% en masse d'Aerosil^{®} 380 et 75,5% en masse d'eau.

Ces cinétiques de séchage ont été obtenues pour des couches de gel de 2 mm d'épaisseur, à 22°C et 60% d'humidité relative.

Cette figure montre que la présence de silice dans le gel contribue également à réduire la vitesse de séchage de ce gel.

### * Influence de l'épaisseur du dépôt du gel :

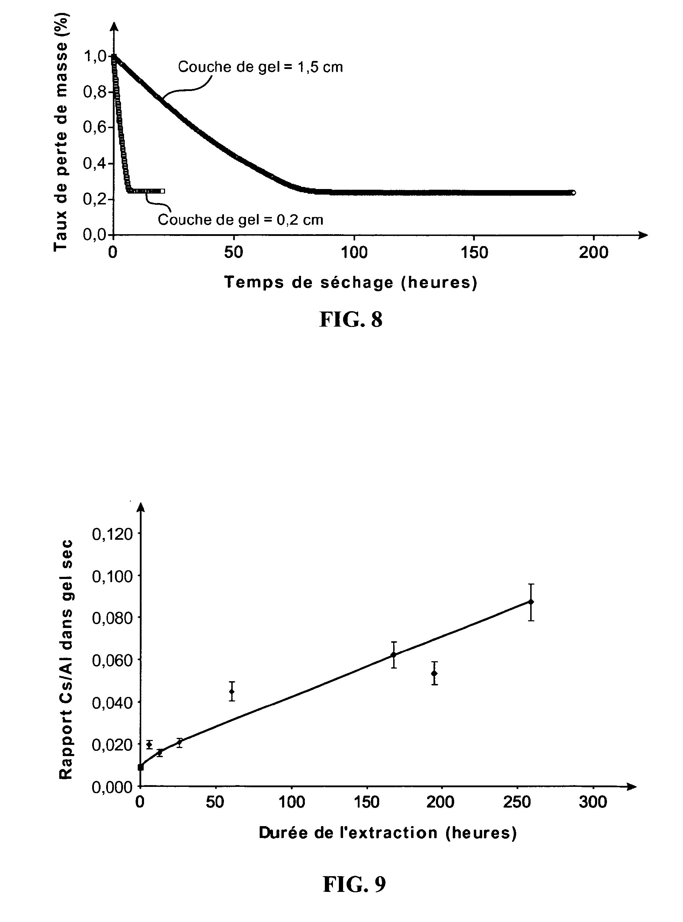

La figure 8 représente, sous la forme de courbes, les cinétiques de séchage obtenues pour un gel comprenant 23,7% en masse d'alumine Aeroxil^{®} Alu C et 76,3% en masse d'eau lorsque celui-ci est déposé en couches de 0,2 cm ou de 1,5 cm.

Ces cinétiques de séchage ont été obtenues à 22°C et 60% d'humidité relative.

Cette figure montre que l'épaisseur de la couche de gel contribue, elle aussi, à réduire la vitesse de séchage de ce gel.

### Exemple 2 :

Un essai de décontamination d'un mortier contaminé en césium a été réalisé en :
- extrayant le césium du mortier selon le mode de mise en oeuvre illustré sur la figure 1, avec
- un gel comprenant 23,5% en masse d'alumine Aeroxil^{®} Alu C et 76,3% en masse d'une solution de NaOH 5 M, et
- les paramètres suivants : dépôt du gel en une couche de 0,5 cm d'épaisseur ; application aux électrodes d'une densité de courant électrique de 2 A/m² d'armature interne ; température de 22°C ; hygrométrie relative de 60%.

L'extraction a été conduite pendant 260 heures. Des échantillons de gel ont été prélevés à différents moments de cette extraction, puis soumis à un séchage naturel dans les conditions ambiantes du laboratoire et leurs teneurs en césium et en aluminium ont été déterminées.

La figure 9 présente l'évolution du rapport de la teneur en césium à la teneur en aluminium du gel sec en fonction de la durée de l'extraction du césium.

### REFERENCES CITEES

**[1]** EP-A-0 398 117
**[2]** FR-A-2 770 839

## Revendications

1. Procédé de décontamination électrocinétique d'un milieu solide poreux, qui comprend :
a) l'extraction des espèces contaminantes présentes dans ce milieu solide dans un électrolyte qui se présente sous la forme d'un gel essentiellement inorganique, cette extraction étant réalisée en appliquant un courant électrique entre deux électrodes disposées à la surface et/ou à l'intérieur du milieu solide, le contact de l'une au moins de ces électrodes avec ledit milieu solide étant assuré par une couche dudit gel,
b) le séchage du gel renfermant les espèces contaminantes ainsi extraites jusqu'à l'obtention d'un résidu sec qui se fracture, et
c) l'élimination du résidu sec ainsi obtenu dudit milieu solide.

2. Procédé selon la revendication 1, dans lequel le gel électrolytique comprend de 10 à 40% en masse d'un agent viscosant inorganique, dispersé dans 60 à 90% en masse d'une phase aqueuse de pH basique.

3. Procédé selon la revendication 2, dans lequel l'agent viscosant inorganique est de l'alumine ou un mélange d'alumine et de silice.

4. Procédé selon la revendication 3, dans lequel l'agent viscosant est de l'alumine pyrogénée ou un mélange d'alumine et de silice pyrogénées.

5. Procédé selon l'une quelconque des revendications 2 à 4, dans lequel l'agent viscosant ne représente pas plus de 30% en masse du gel.

6. Procédé selon l'une quelconque des revendications 2 à 5, dans lequel la phase aqueuse du gel est une solution d'une base inorganique choisie parmi la soude, la potasse, l'hydroxyde de calcium, le carbonate de potassium, le carbonate de sodium et leurs mélanges.

7. Procédé selon la revendication 6, dans lequel la base inorganique est de la soude ou de la potasse.

8. Procédé selon la revendication 6 ou la revendication 7, dans lequel la base inorganique est présente dans la phase aqueuse à une concentration d'au moins 3 moles/L de phase aqueuse.

9. Procédé selon l'une quelconque des revendications 2 à 8, dans lequel le gel comprend de plus un polymère superabsorbant et/ou un agent tensioactif.

10. Procédé selon l'une quelconque des revendications 1 à 9, dans lequel le milieu solide poreux comprenant une armature interne électriquement conductrice, l'une des électrodes est constituée par cette armature ou une partie de cette armature, tandis que l'autre électrode est constitué par un élément électriquement conducteur qui est appliqué sur une surface du milieu solide poreux ou implanté dans ce milieu, auquel cas seul le contact de cet élément avec ledit milieu est assuré par une couche de gel.

11. Procédé selon l'une quelconque des revendications 1 à 9, dans lequel les deux électrodes sont constituées par des éléments électriquement conducteurs qui sont appliqués sur deux surfaces différentes du milieu solide poreux, auquel cas le contact de chacun de ces éléments avec ce milieu est assuré par une couche de gel.

12. Procédé selon l'une quelconque des revendications 1 à 9, dans lequel les deux électrodes sont constituées par deux éléments électriquement conducteurs qui sont implantés dans le milieu solide poreux, auquel cas le contact de chacun de ces éléments avec ce milieu est assuré par une couche de gel.

13. Procédé selon l'une quelconque des revendications précédentes, dans lequel la ou les couches de gel présentent une épaisseur de 0,5 à 2 cm.

14. Procédé selon l'une quelconque des revendications précédentes, dans lequel le milieu solide poreux est un matériau à matrice cimentaire.

15. Procédé selon l'une quelconque des revendications précédentes, dans lequel les espèces contaminantes sont des radioéléments.

## Claims

1. A method for electrokinetic decontamination of a porous solid medium, which comprises:
a) extracting the contaminating species present in this solid medium in an electrolyte which is an essentially inorganic gel, this extraction being achieved by applying an electric current between two electrodes positioned at the surface and/or in the interior of the solid medium, the contact of at least one of these electrodes with said solid medium being ensured by a layer of said gel,
b) drying the gel containing the thereby extracted contaminating species until a dry residue is obtained which fractures, and
c) removing the thereby obtained dry residue from said solid medium.

2. The method according to claim 1, wherein the electrolytic gel comprises from 10 to 40% by mass of an inorganic viscosifying agent, dispersed in 60 to 90% by mass of an aqueous phase with a basic pH.

3. The method according to claim 2, wherein the inorganic viscosifying agent is alumina or a mixture of alumina and silica.

4. The method according to claim 3, wherein the viscosifying agent is pyrogenated alumina or a mixture of pyrogenated alumina and silica.

5. The method according to any of claims 2 to 4, wherein the viscosifying agent does not account for more than 30% by mass of the gel.

6. The method according to any of claims 2 to 5, wherein the aqueous phase of the gel is a solution of an inorganic base selected from soda, potash, calcium hydroxide, potassium carbonate, sodium carbonate and mixtures thereof.

7. The method according to claim 6, wherein the inorganic base is soda or potash.

8. The method according to claim 6 or claim 7, wherein the inorganic base is present in the aqueous phase at a concentration of at least 3 mol/L of aqueous phase.

9. The method according to any of claims 2 to 8, wherein the gel further comprises a super-absorbent polymer and/or a surfactant.

10. The method according to any of claims 1 to 9, wherein the porous solid medium comprises an electrically conducting internal frame, one of the electrodes is formed by this frame or a portion of this frame, while the other electrode is formed by an electrically conducting element which is applied on a surface of the porous solid medium or implanted in this medium, in which case only the contact of this element with said medium is ensured by a gel layer.

11. The method according to any of claims 1 to 9, wherein both electrodes are formed by electrically conducting elements which are applied onto two different surfaces of the porous solid medium, in which case the contact of each of these elements with this medium is ensured by a gel layer.

12. The method according to any of claims 1 to 9, wherein both electrodes are formed by two electrically conducting elements which are implanted in the porous solid medium, in which case the contact of each of these elements with this medium is ensured by a gel layer.

13. The method according to any of the preceding claims, wherein the gel layer(s) has(have) a thickness from 0.5 to 2 cm.

14. The method according to any of the preceding claims, wherein the porous solid medium is a material with a cement matrix.

15. The method according to any of the preceding claims, wherein the contaminating species are radio-elements.

## Patentansprüche

1. Verfahren zur elektrokinetischen Dekontamination eines porösen festen Mediums, das umfasst:
a) das Extrahieren von kontaminierenden Stoffen, die in diesem festen Medium vorhanden sind, in einem Elektrolyten, der in der Form eines im Wesentlichen anorganischen Gels vorliegt, wobei diese Extraktion unter Anlegen eines elektrischen Stroms zwischen zwei Elektroden realisiert wird, die an der Oberfläche und/oder im Inneren des festen Mediums angeordnet sind, wobei der Kontakt wenigstens einer dieser Elektroden mit dem festen Medium durch eine Schicht des Gels gewährleistet wird,
b) das Trocknen des Gels, welches die derart extrahierten kontaminierenden Stoffe einschließt, bis ein aufbrechbarer trockener Rest erhalten wird und
c) das Entfernen des derart erhaltenen trockenen Rests von dem festen Medium.

2. Verfahren nach Anspruch 1, bei dem das elektrolytische Gel 10 bis 40 Masseprozent eines anorganischen Verdickungsmittels umfasst, das in 60 bis 90 Masseprozent einer wässrigen Phase mit basischem pH dispergiert ist.

3. Verfahren nach Anspruch 2, bei dem das anorganische Verdickungsmittel Aluminiumoxid oder eine Mischung aus Aluminiumoxid und Siliziumoxid ist.

4. Verfahren nach Anspruch 3, bei dem das Verdickungsmittel pyrogeniertes Aluminiumoxid oder eine Mischung von pyrogeniertem Aluminiumoxid und Siliziumoxid ist.

5. Verfahren nach einem der Ansprüche 2 bis 4, bei dem das Verdickungsmittel nicht mehr als 30 Masseprozent des Gels repräsentiert.

6. Verfahren nach einem der Ansprüche 2 bis 5, bei dem die wässrige Phase des Gels eine Lösung einer anorganischen Base ist, ausgewählt aus Natron, Kali, Kalziumhydroxid, Kaliumkarbonat, Natriumkarbonat und ihren Mischungen.

7. Verfahren nach Anspruch 6, bei dem die anorganische Base Natron oder Kali ist.

8. Verfahren nach Anspruch 6 oder Anspruch 7, bei dem die anorganische Base in der wässrigen Phase mit einer Konzentration von wenigstens 3 Mol/L der wässrigen Phase vorhanden ist.

9. Verfahren nach einem der Ansprüche 2 bis 8, bei dem das Gel ferner ein superabsorbierendes Polymer und/oder ein tensioaktives Mittel umfasst.

10. Verfahren nach einem der Ansprüche 1 bis 9, bei dem das poröse feste Medium eine elektrisch leitende innere Armatur umfasst, wobei eine der Elektroden durch diese Armatur oder einen Teil dieser Armatur gebildet ist, wohingegen die andere Elektrode durch ein elektrisch leitendes Element gebildet ist, das an einer Oberfläche des porösen festen Mediums angebracht oder in dieses Medium implantiert ist, in welchem Fall nur der Kontakt dieses Elements mit dem Medium durch eine Gelschicht gewährleistet wird.

11. Verfahren nach einem der Ansprüche 1 bis 9, bei dem die zwei Elektroden durch elektrisch leitende Elemente gebildet werden, die an zwei verschiedenen Oberflächen des porösen festen Mediums angebracht sind, in welchem Fall der Kontakt jedes dieser Elemente mit diesem Medium durch eine Gelschicht gewährleistet wird.

12. Verfahren nach einem der Ansprüche 1 bis 9, bei dem die zwei Elektroden durch zwei elektrisch leitende Elemente gebildet werden, die in dem porösen festen Medium implantiert sind, in welchem Fall der Kontakt jedes dieser Elemente mit diesem Medium durch eine Gelschicht gewährleistet wird.

13. Verfahren nach einem der vorhergehenden Ansprüche, bei dem die Gelschicht(en) eine Dicke von 0,5 bis 2 cm aufweist/aufweisen.

14. Verfahren nach einem der vorhergehenden Ansprüche, bei dem das poröse feste Medium ein Material mit Zementmatrix ist.

15. Verfahren nach einem der vorhergehenden Ansprüche, bei dem die kontaminierenden Stoffe Radioelemente sind.
